Europäisches Patentamt

European Patent Office

Office européen des brevets

(11) Veröffentlichungsnummer: **0 512 141 A1**

## EUROPÄISCHE PATENTANMELDUNG

(21) Anmeldenummer: **91107434.2**

(22) Anmeldetag: **07.05.91**

(51) Int. Cl.5: **H04L  12/56**

(43) Veröffentlichungstag der Anmeldung:
**11.11.92 Patentblatt  92/46**

(84) Benannte Vertragsstaaten:
**AT BE CH DE FR GB IT LI NL SE**

(71) Anmelder: **SIEMENS AKTIENGESELLSCHAFT**
**Wittelsbacherplatz 2**
**W-8000 München 2(DE)**

(72) Erfinder: **Fischer, Wolfgang, Dr.-Ing.**
**Erikastrasse 18d**
**W-8034 Germering(DE)**
Erfinder: **Storm, Jürgen**
**Freilandstrasse 37**
**W-8039 Puchheim(DE)**

(54) **Verfahren zur Vermittlung von ATM-Nachrichtenzellenströmen hoher Bitrate über eine Vermittlungseinrichtung niedrigerer Bitrate.**

(57) In einer Vermittlungseinrichtung werden die Nachrichtenzellen eines Nachrichtenzellenstroms, der eine um ein Mehrfaches höhere Transportbitrate als die Übertragungsbitrate der Koppelelemente der Vermittlungseinrichtung aufweist auf eine dem Mehrfachen entsprechende Anzahl von Koppelfeldeingängen verteilt, wobei den Nachrichtenzellen Informationen hinzugefügt werden, die sämtliche Module bezeichnen über die die jeweiligen Nachrichtenzellen zu einem jeweiligen Ausgang des Koppelfeldes durchgeschaltet werden.

FIG 1

Die Übertragungsbitrate in einer Vermittlungseinrichtung ist technologiebedingt durch die Schaltgeschwindigkeit der in der Vermittlungseinrichtung eingesetzten Koppelelemente begrenzt, während auf den Übertragungsstrecken zwischen den Vermittlungseinrichtungen durchaus höhere Übertragungsbitraten möglich sind.

Aus der ntz (Nachrichtentechnische Zeitschrift, Band 43 (1990), Heft 11, Seiten 810 bis 815) ist ein Koppelfeld zur Vermittlung von nach dem ATM (Asynchronous Transfer Mode)-Prinzip übertragenen Nachrichtenzellen bekannt. Bei diesem modular strukturierten Koppelfeld sind die Module untereinander über Verbindungsleitungen verbunden, auf denen die Übertragungsbitrate um ein Vierfaches höher ist als in den Koppelelementen der Module. Weiter werden bei diesem Koppelfeld die Nachrichtenzellen jeweils in Segmente unterteilt und mit einer Zielinformation versehen, die beschreibt, zu welchem Koppelfeldausgang die jeweilige Nachrichtenzelle gelangen soll. Anhand dieser Zielinformation wird für jede Nachrichtenzelle individuell in jedem Koppelelement der zu benutzende Ausgang und damit der weitere Weg zum nächsten Koppelelement in der nächsten Stufe des Koppelfeldes bestimmt. Bei einem solchen sogenannten "selbststeuernden Koppelfeld" wird also die von jeder Nachrichtenzelle mitgeführte Zielinformation in jedem Koppelelement des Koppelfeldes ausgewertet, wodurch sich jede Nachrichtenzelle gewissermaßen selbst ihren Weg zu dem betreffenden Koppelfeldausgang sucht. Dieses Koppelfeldkonzept bedingt neben dem in jedem Koppelelement vorzunehmenden Aufwand zur Auswertung der Zielinformation eine ständige Verfügbarkeit von Informationen über die aktuelle Koppelfeldkonfiguration in den Koppelelementen, woraus sich eine relativ hohe Komplexität der Koppelelemente ergibt.

Die Erfindung löst das Problem, die oben angegebenen Nachteile zu vermeiden.

Dieses Problem wird gelöst durch ein Verfahren zur Vermittlung von Nachrichtenzellen eines einen Nachrichtenzellenstrom nach einem asynchronen Übertragungsverfahren transportierenden Übertragungssystems über ein mit Modulen aufgebautes Koppelfeld, wobei die Transportbitrate des Übertragungssystems ein Mehrfaches der Übertragungsbitrate der Koppelelemente der Module ist und wobei die Nachrichtenzellen auf eine dem Mehrfachen entsprechende Anzahl von Koppelfeldeingängen jeweils unter Hinzufügung von Informationen verteilt werden, die alle Module bezeichnen, über die die jeweiligen Nachrichtenzellen zu einem jeweiligen Ausgang des Koppelfeldes durchgeschaltet werden sollen, worauf die Nachrichtenzellen über die so bezeichneten Module zu den betreffenden Ausgängen durchgeschaltet werden, von wo aus sie wieder zu dem Nachrichtenzellenstrom zusammengefaßt werden.

Die Erfindung bringt die Vorteile mit sich, daß ungleichmäßige Lastverteilungen an den Koppelfeldeingängen und durch in kurzen Zeitabständen aufeinanderfolgende Nachrichtenzellenankünfte bedingte Überlasterscheinungen vermieden sind, wobei die Koppelelemte des Koppelfeldes selbst über keine Informationen über die aktuelle Koppelfeldkonfiguration verfügen müssen. Als weiterer Vorteil ist zu nennen, daß an die Nachrichtenzellen Informationen hinzugefügt werden können, die einen bestimmten Weg durch das Koppelfeld festlegen, womit einzelne Koppelelemente direkt ansteuerbar sind; dabei können die Verbindungen mit niedriger Übertragungsbitrate und festgelegtem Durchschalteweg, z.B. Verbindungen für Steuer- bzw. Testzwecke gleichzeitig mit Verbindungen, deren Nachrichtenzellen auf unterschiedlichen Wegen über das Koppelfeld durchgeschaltet werden, vermittelt werden.

In weiterer Ausgestaltung werden die Nachrichtenzellen auf die Koppelfeldeingänge zyklisch verteilt.

Diese Maßnahme bringt eine einfache und gleichmäßige Verteilung von Nachrichtenzellen mit sich.

In weiterer Ausgestaltung werden den Nachrichtenzellen, die über eine Mehrzahl von Moduln durchgeschaltet werden müssen und die über unterschiedliche Moduln durchgeschaltet werden können, Informationen hinzugefügt, die für aufeinanderfolgende Nachrichtenzellen unterschiedliche Wege über unterschiedliche Moduln bezeichnen.

Durch diese Maßnahme wird eine breite Streuung von Nachrichtenzellen, die nicht über Kurzwege vermittelbar sind über eine große Anzahl von Wegen durch das Koppelfeld erreicht, wodurch die Wartezeiten am Ausgang der ersten Stufe des Koppelfeldes weitgehend reduziert sind.

In weiterer Ausgestaltung erfolgt die Verteilung von Nachrichtenzellen für eine jede von redundanten Koppelfeldebenen getrennt.

Diese Maßnahme bringt im Fall einer durch einen Fehler oder einer Rekonfiguration der redundanten Koppelfeldebenen bedingten unterschiedlichen Konfiguration der Koppelfeldebenen eine erhöhte Durchschalteleistungsfähigkeit des Koppelfeldes mit sich.

In weiterer Ausgestaltung werden den Nachrichtenzellen eines Nachrichtenzellenstroms, der eine Transportbitrate aufweist, die die Übertragungsbitrate der Koppelelemente nicht übersteigt jeweils Informationen hinzugefügt, die alle Moduln bezeichnen über die die jeweiligen Nachrichtenzellen zu einem jeweiligen Koppelfeldausgang durchgeschaltet werden, wobei dieser Nachrichtenzellenstrom einem Koppelfeldeingang zugefügt wird und worauf die Nachrichtenzellen über die so bezeichneten Moduln zu dem betreffenden Ausgang durchgeschaltet werden.

Durch diese Maßnahme wird die Durchschaltung sowohl von Nachrichtenzellenströmen mit höherer Transportbitrate als auch von Nachrichtenzellenströmen mit kleinerer oder gleicher Transportbitrate wie der Übertragungsbitrate der Koppelemente des Koppelfeldes ermöglicht.

In weiterer Ausgestaltung wird den Nachrichtenzellen vor der Durchschaltung durch das Koppelfeld verbindungsindividuell eine zyklisch fortlaufende Folgenummer hinzugefügt, anhand derer die Reihenfolge der Nachrichtenzellen für jede Verbindung sichergestellt wird.

Durch diese Maßnahme werden durch das Verteilprinzip bedingte oder durch die Durchschaltung über redundante Koppelfeldebenen bedingte Überholvorgänge von Nachrichtenzellen rückgängig gemacht.

Im folgenden wird die Erfindung im zum Verständnis erforderlichen Umfang anhand von Figuren beschrieben.

Dabei zeigen:

Fig. 1    ein Blockschaltbild einer Schaltungsanordnung, in der das erfindungsgemäße Verfahren realisiert ist und

Fig. 2    verdeutlicht Einzelheiten des in Figur 1 mit HTU bezeichneten Blockes.

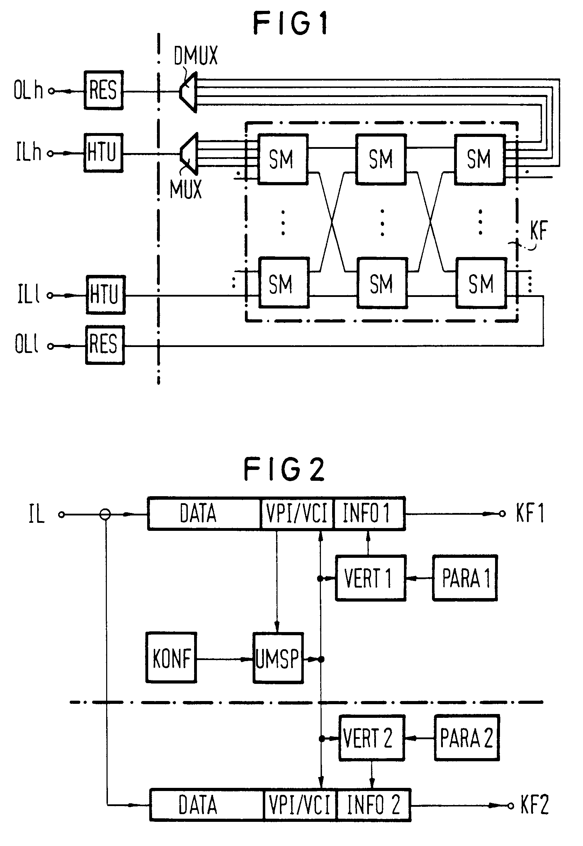

Figur 1 zeigt die zum Verständnis der Erfindung erforderlichen Elemente einer Vermittlungseinrichtung. Figur 1 läßt ein dreistufiges, mit einer Mehrzahl von Modulen SM gebildetes und zur Durchschaltung von nach einem asynchronen Übertragungsverfahren übertragenen Nachrichtenzellen geeignetes Koppelfeld KF erkennen, wobei die Ein- und Ausgänge des Koppelfeldes durch Ein- bzw. Ausgänge der Modulen gebildet sind. Die Koppelmodule weisen in der Zeichnung nicht näher dargestellte Koppelelemente auf, die auf der Bitebene die eigentliche Durchschaltung der Nachrichtenzellen bewirken. Die Koppelelemente weisen eine vorgegebene, beispielsweise durch die zum Einsatz kommende Technologie bedingte maximale Übertragungsbitrate auf.

Über eine Zubringerleitung ILl wird dem Koppelfeld KF über eine Anpassungseinrichtung HTU ein Nachrichtenzellenstrom zugeführt, dessen Transportbitrate die Übertragungsbitrate der Koppelelemente nicht übersteigt. Dieser Nachrichtenzellenstrom möge im Beispiel über das Koppelfeld und eine Ausgangseinrichtung RES auf die Abnehmerleitung OLl durchgeschaltet werden.

Über eine Zubringerleitung ILh wird ein Nachrichtenzellenstrom, der im Beispiel eine Transportbitrate aufweist, die die Übertragungsbitrate der Koppelelemente um das Vierfache übersteigt einer Anpassungseinrichtung HTU zugeführt. Von dieser Anpassungseinrichtung werden die von diesem Nachrichtenzellenstrom übertragenen Nachrichtenzellen einer im Ausführungsbeispiel mit einem Multiplexer gebildeten Verteileinrichtung MUX zugeführt. In der Verteileinrichtung werden die Nachrichtenzellen auf eine Mehrzahl von Koppelfeldeingängen verteilt, wobei die Mehrzahl so bemessen ist, daß die Summe der Übertragungsbitraten der Koppelfeldeingänge mindestens der Transportbitrate des Nachrichtenstroms entspricht. Weist also beispielsweise der Nachrichtenzellenstrom eine Transportbitrate von 600 Mbit/s und jeder mit einem Koppelelement verbundene Koppelfeldeingang eine Übertragungsbitrate von 150 Mbit/s auf, so werden die Nachrichtenzellen des Übertragungssystems auf vier Koppelfeldeingänge verteilt. Die Verteilung von Nachrichtenzellen kann dabei vorteilhaft zyklisch erfolgen.

In diesem Zusammenhang sei noch darauf hingewiesen, daß zur Anpassung der höheren Transportbitrate auf der Zubringerleitung an die dergegenüber niedrigeren Übertragungsbitrate in den Koppelelemente in jeder Verbindungsleitung zwischen der Verteileinrichtung MUX und den Eingängen des Koppelfeldes in der Zeichnung nicht dargestellte Zwischenspeicher vorgesehen sind, die mit FIFO-Speichern gebildet sein können.

Eine ebenso große Anzahl von Ausgangsleitungen des Koppelfeldes wie Eingangsleitungen, auf die die Nachrichtenzellen eines Nachrichtenzellenstromes verteilt werden, sind mit einer Zusammenfassungseinrichtung DMUX verbunden. In der Zusammenfassungseinrichtung werden die von diesen Ausgangsleitungen ankommenden Nachrichtenzellen zu einem Nachrichtenzellenstrom zusammengefaßt. Beträgt also beispielsweise die Übertragungsbitrate der mit den Koppelelementen verbundenen Ausgangsleitungen des Koppelfeldes 150 Mbit/s und die Transportbitrate des Übertragungssystems 600 Mbit/s so werden in der Zusammenfassungseinrichtung vier Koppelfeldausgangsleitungen zu einem Übertragungssystem zusammengefaßt. Die Realisierung einer solchen Zusammenfassungseinrichtung ist dem Fachmann geläufig und braucht deshalb nicht näher beschrieben zu werden. Die Zusammenfassungseinrichtung ist über eine Ausgangseinrichtung RES mit einer Abnehmerleitung OLh verbunden. Die Ausgangseinrichtung hat die Aufgabe, die Reihenfolge der Nachrichtenzellen für jede virtuelle Verbindung sicherzustellen. Solche Einrichtungen zur Sicherstellung der Nachrichtenzellenreihenfolge sind beispielsweise aus der EP-A-89103798.8 bekannt und brauchen deshalb hier nicht näher beschrieben zu werden.

Figur 2 zeigt nähere Einzelheiten der Anpassungseinrichtung HTU. In der Anpassungseinrichtung werden die auf der Zubringerleitung übertragenen Nachrichtenzellen, die bekanntlich jeweils einen die zugehörige virtuelle Verbindung VCI/VPI bezeichnenden Paketkopf und einen die Nutzinformation tragenden Datenteil DATA aufweisen zunächst zwischengespeichert. Daran kann sich gegebenenfalls anhand der im Nachrichtenzellenkopf mitgeführten Information eine Überprüfung der jeweiligen Nachrichtenzelle anschließen. Die Bezeichnung VPI/VCI der virtuellen Verbindung wird, wie durch einen Pfeil angedeutet, einem Umwertespeicher UMSP zugeführt. In dem Umwertespeicher wird unter Auswertung von in einem mit KONF bezeichneten Speicher abgelegten Informationen, die das Koppelnetz beschreiben eine neue Bezeichnung VCI/VPI für die jeweilige virtuelle Verbindung gebildet, die für die weitere Weiterleitung der zugehörigen Nachrichtenzellen relevant ist. Die neue Bezeichnung für die betreffende virtuelle Verbindung wird wie durch einen Pfeil angedeutet in den Nachrichtenzellenkopf eingetragen.

Entsprechend der Erfindung werden die Nachrichtenzellen eines Nachrichtenzellenstroms, der eine um ein Mehrfaches höhere Transportbitrate aufweist als die Übertragungsbitrate der Koppelelemente auf eine dem Mehrfachen entsprechende Anzahl von Koppelfeldeingängen verteilt. Diese Verteilung wird dadurch vorgenommen, daß einer Einrichtung VERT einerseits die Information zu welchem Ausgang des Koppelfeldes die jeweilige Nachrichtenzellen weitergeleitet werden soll und andererseits eine Information von einer Einrichtung PARA, die Informationen über die augenblickliche Koppelfeldkonfiguration zur Verfügung stellt, zugeführt werden; die Einrichtung VERT bildet aus diesen Informationen eine Information INFO, die der durchzuschaltenden Nachrichtenzelle hinzugefügt wird und die alle Module bezeichnet, über die die jeweiligen Nachrichtenzellen zu einem jeweiligen Ausgang des Koppelfeldes weitergeleitet werden sollen. Über die Einrichtung PARA ist anzumerken, daß dort Informationen darüber abgelegt sind, welche Module gerade ausgefallen sind, womit über diese Module keine Nachrichtenzellen weitergeleitet werden können. Die Nachrichtenzellen werden jeweils einem Eingang des Koppelfeldes zugeführt wobei im Falle der Durchschaltung eines Nachrichtenzellenstroms mit höherer Bitrate als der Übertragungsbitrate der Koppelfeldelemente MUX die Nachrichtenzellen des Nachrichtenzellenstroms durch die Verteileinrichtung auf die betreffenden Eingänge des Koppelfeldes verteilt werden. Von den Koppelfeldeingängen werden die Nachrichtenzellen dann über sämtliche in der zugehörigen Information INFO bezeichneten Module zu den betreffenden Koppelfeldausgängen durchgeschaltet.

In einer weiteren Ausgestaltung kann vorgesehen sein, daß die Nachrichtenzellen eines Nachrichtenzellenstroms nach Maßgabe der Information INFO möglichst breit gestreut über die Module des Koppelfeldes durchgeschaltet werden. So können beispielsweise bei einer mehrstufigen Koppelfeldanordnung die Nachrichtenzellen eines Nachrichtenzellenstroms über sämtliche Moduln der zweiten Stufe des Koppelfeldes verteilt werden, über die sie den betreffenden Koppelfeldausgang erreichen. Durch diese Maßnahme wird erreicht, daß Blockierungen in der ersten Stufe des Koppelfeldes weitgehend vermieden sind und Überlasterscheinungen innerhalb des Koppelfeldes entgegengewirkt wird.

Wird in einem Koppelfeld mit redundanten Koppelfeldebenen die Verteilung von Nachrichtenzellen über eine einzige Verteileinrichtung vorgenommen, so wird bei Ausfall eines Moduls in einer der Koppelfeldebenen das entsprechenden Modul der redundanten Koppelfeldebene ebenfalls bei der weiteren Durchschaltung von Nachrichtenzellen umgangen, womit die Leistungsfähigkeit der Vermittlungseinrichtung mehr als notwendig eingeschränkt wird. Für den Fall, daß ein Koppelfeld mit redundanten Koppelfeldebenen zum Einsatz kommt, kann in weiterer Ausgestaltung vorgesehen sein, daß die Verteilung von Nachrichtenzellen für jede Koppelfeldebene getrennt erfolgt. Durch diese Maßnahme wird erreicht, daß die Verteilung von Nachrichtenzellen unabhängig von der jeweiligen Struktur der redundaten Koppelfeldebenen erfolgen kann. Eine voneinander abweichende Struktur von redundanten Koppelfeldebenen kann beispielsweise schon dadurch gegeben sein, daß ein Modul in einer der Koppelfeldebenen ausfällt. Eine voneinander abweichende Struktur von redundanten Koppelfeldebenen kann auch dadurch gegeben sein, daß im Zuge einer Rekonfiguration eines in Betrieb befindlichen Koppelfeldes mit redundanten Koppelfeldebenen nacheinander jeweils die redundanten Koppelfeldebenen gegen Koppelfeldebenen mit geänderter Struktur ausgetauscht werden.

Im Fall einer koppelfeldebenenindividuellen Verteilung werden also die Nachrichtenzellen nach Maßgabe der für die jeweilige Koppelfeldebene in der zugehörigen Einrichtung PARA bereitgehaltenen Informationen über die augenblickliche Struktur der Koppelfeldebene zu dem betreffenden Koppelfeldausgang durchgeschaltet.

In Figur 2 sind unterhalb einer gestrichelten Linie Einrichtungen für eine getrennte Verteilung über redundante Koppel feldebenen dargestellt. Von jeder auf der Zubringerleitung IL ankommenden Nachrichtenzelle wird eine Kopie in einen weiteren Zwischenspeicher eingeschrieben. In den Nachrichtenzellenkopf der über die Koppelfeldebene KF2 durchzuschaltenden Nachrichtenzelle wird die gleiche neue Bezeichnung der virtuellen Verbindung eingetragen wie in den Nachrichtenzellenkopf der über die Koppelfeldebene KF1 durchzuschaltenden Nachrichtenzelle. In der Einrichtung VERT2 wird nun eine im allgemeinen von der Information INFO1 abweichende Information INFO2 mit Hilfe der von dem Umwertespeicher gelieferten neuen Bezeichnung der virtuellen Verbindung und der von der Einrichtung PARA2 bereitgehaltenen Information über die aktuelle Struktur der redundanten Koppelfeldebene KF2 gebildet. Die nachrichtenzellenindividuell gebildete Information INFO2, die sämtliche Module bezeichnet, über die die betreffende Nachrichtenzelle durchgeschaltet werden soll wird der gerade behandelten Nachrichtenzelle hinzugefügt, worauf die Nachrichtenzelle nach Maßgabe der Information INFO2 über die redundante Koppelfeldebene KF2 zu dem betreffenden Koppelfeldausgang durchgeschaltet wird.

Wie aus Figur 1 ersichtlich, werden die Koppelfeldausgänge, zu denen die Nachrichtenzellen eines Nachrichtenzellenstroms, der eine höhere Transportbitrate als die Übertragungsbitrate der Koppelelemente des Koppelfeldes aufweist, durchgeschaltet sind, mit Hilfe einer Zusammenfassungseinrichtung DMUX wieder zu einem Nachrichtenzellenstrom zusammengefaßt.

Aufgrund der Durchschaltung von Nachrichtenzellen einer virtuellen Verbindung durch das Koppelfeld über unterschiedliche Wege kann es zu unterschiedlichen Durchlaufzeiten von Nachrichtenzellen kommen, wodurch Überholungen von Nachrichtenzellen nicht auszuschließen sind. Es ist Aufgabe einer Ausgangseinrichtung RES die Reihenfolge von Nachrichtenzellen sicherzustellen. Dies kann in an sich bekannter Weise (vergleiche EP-A-90108054.9, EP-A-90108055.6) dadurch erfolgen, daß den Nachrichtenzellen in der Anpassungseinrichtung jeweils eine verbindungsindividuell zyklisch fortlaufende Folgenummer hinzugefügt wird, anhand derer die Reihenfolge von Nachrichtenzellen verbindungsindividuell sichergestellt wird. Eine weitere Aufgabe der Ausgangseinrichtung besteht darin, die innerhalb der Vermittlungseinrichtung benutzte Information INFO und gegebenenfalls die Folgenummer von den Nachrichtenzellen zu entfernen. Von der Ausgangseinrichtung werden die Nachrichtenzellen auf die mit der Ausgangseinrichtung verbundene Abnehmerleitung OL weitergeleitet. Bezüglich Figur 1 ist noch zu erwähnen, daß im Fall von redundanten Koppelfeldebenen die Einrichtungen rechts von der gestrichelten Linie redundant auszuführen sind, während die Einrichtungen links der gestrichelten Linie an die Betriebsweise mit redundanten Koppelfeldebenen anzupassen sind; für die Anpassungseinrichtung wurde dies weiter oben beschrieben, während für die Ausgangseinrichtung z.B. aus der EP-A-90108054.9 bzw. EP-A-90108055.6 bekannte Verfahren zum Einsatz kommen können.

Die Erfindung wurde hier nur für eine Verteilung von Nachrichtenzellenströmen mit einer höheren Transportbitrate als der Übertragungsbitrate der Koppelelemente des Koppelfeldes auf eine Mehrzahl von Eingängen einer Koppelfeldebene dargestellt; es sei darauf hingewiesen, daß die Verteilung von Nachrichtenzellen eines Nachrichtenzellenstroms ohne Einschränkung auch auf die Koppelfeldeingänge von zueinander in paralleler Struktur stehender Koppelfeldebenen möglich ist.

**Patentansprüche**

1. Verfahren zur Vermittlung von Nachrichtenzellen eines einen Nachrichtenzellenstrom nach einem asynchronen Übertragungsverfahren transportierenden Übertragungssystems über ein mit Moduln (MS) aufgebautes Koppelfeld (KF), wobei die Transportbitrate des Übertragungssystems ein Mehrfaches der Übertragungsbitrate der Koppelelemente der Module ist und wobei die Nachrichtenzellen auf eine dem Mehrfachen entsprechende Anzahl von Koppelfeldeingängen jeweils unter Hinzufügung von Informationen verteilt werden, die alle Module bezeichnen, über die die jeweiligen Nachrichtenzellen zu einem jeweiligen Ausgang des Koppelfeldes durchgeschaltet werden sollen, worauf die Nachrichtenzellen über die so bezeichneten Module zu den betreffenden Ausgängen durchgeschaltet werden, von wo aus sie wieder zu dem Nachrichtenzellenstrom zusammengefaßt werden.

2. Verfahren nach Anspruch 1, bei dem die Nachrichtenzellen auf die Koppelfeldeingänge zyklisch verteilt werden.

3. Verfahren nach einem der vorstehenden Ansprüche bei dem Nachrichtenzellen, die über eine Mehrzahl von Moduln durchgeschaltet werden müssen und die über unterschiedliche Moduln durchgeschaltet werden können Informationen hinzugefügt werden, die für aufeinanderfolgende Nachrichtenzellen unterschiedliche Wege über unterschiedliche Moduln bezeichnen.

4. Verfahren nach einem der vorstehenden Ansprüche, bei dem bei Ausfall eines Moduls den Nachrichtenzellen nur solche Informationen hinzugefügt werden, die jeweils einen das ausgefallene Modul umgehenden Weg durch das Koppelnetz bezeichnen.

5. Verfahren nach einem der vorstehenden Ansprüche, bei dem der Nachrichtenzellenstrom über eine Mehrzahl von redundanten Koppelfeldebenen vermittelt wird.

6. Verfahren nach Anspruch 5, bei dem die Nachrichtenzellen für jede Koppelfeldebene getrennt verteilt werden.

7.  Verfahren nach einem der vorstehenden Ansprüche bei dem den Nachrichtenzellen eines Nachrichtenzellenstroms, der eine Transportbitrate aufweist, die die Übertragungsbitrate der Koppelelemente nicht übersteigt, jeweils Informationen hinzugefügt werden, die alle Module bezeichnen, über die die jeweiligen Nachrichtenzellen zu einem jeweiligen Koppelfeldausgang durchgeschaltet werden sollen und dieser Nachrichtenzellenstrom einem Koppelfeldeingang zugeführt wird, worauf die Nachrichtenzellen über die so bezeichneten Module zu dem betreffenden Ausgang durchgeschaltet werden.

8.  Verfahren nach einem der vorstehenden Ansprüche, bei dem den Nachrichtenzellen vor der Durchschaltung durch das Koppelfeld verbindungsindividuell eine zyklisch fortlaufende Folgenummer hinzugefügt wird, anhand derer bei der Zusammenfassung zu dem Nachrichtenzellenstrom die Reihenfolge der Nachrichtenzellen für jede Verbindung sichergestellt wird.

# F I G 1

# F I G 2

Europäisches
Patentamt

**EUROPÄISCHER RECHERCHENBERICHT**

Nummer der Anmeldung

EP    91 10 7434
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PROCEEDINGS, IEEE INTERNATIONAL CONFERENCE ON COMMUNICATIONS '87, 7-10 JUNI 1987, BD. 2 SEITEN 774-781, SEATTLE US Bd. 2/3, M. DE PRYCKER ET AL: 'A Switching Exchange for an Asynchronous Time Division Based Exchange' * Seite 776, rechte Spalte, Zeile 54 - Seite 777, linke Spalte, Zeile 31 * * Seite 777, rechte Spalte, Zeile 4 - Zeile 15 * * Seite 778, linke Spalte, Zeile 45 - rechte Spalte, Zeile 21 * --- | 1,3-5,7 | H04L12/56 |
| Y | IEEE GLOBAL TELECOMMUNICATIONS CONFERENCE, 27-30 NOV. 1989 Bd. 3/3, DALLAS US Seiten 1801 - 1809; T.T. LEE: 'A Modular Architecture for Very Large Packet Switches' | 1,3-5,7 | |
| A | * Zusammenfassung * * Seite 1801, rechte Spalte, Zeile 16 - Zeile 33 * * Seite 1802, rechte Spalte, Zeile 20 - Zeile 24 * * Seite 1803, linke Spalte, Zeile 2 - Zeile 21 * --- | 6 | |
| | | | **RECHERCHIERTE SACHGEBIETE (Int. Cl.5)** |
| A | WO-A-8 602 511 (HUGHES AIRCRAFT CO.) * Zusammenfassung * * Seite 5, Zeile 22 - Seite 6, Zeile 2; Abbildung 1 * --- | 2,8 | H04L |
| A | IEEE JOURNAL ON SELECTED AREAS OF COMMUNICATION Bd. 6, Nr. 9, Dezember 1987, NEW YORK Seiten 1480 - 1488; G.J.ANIDO ET AL: 'Multipath Interconnection: A Technique for Reducing Congestion Within Fast Packet Switching Fabrics' * Seite 1481, linke Spalte, Zeile 11 - Zeile 41 * --- -/-- | - | |

Der vorliegende Recherchenbericht wurde für alle Patentansprüche erstellt

| Recherchenort | Abschlußdatum der Recherche | Prüfer |
|---|---|---|
| DEN HAAG | 19 DEZEMBER 1991 | O'REILLY |

Europäisches
Patentamt

**EUROPÄISCHER RECHERCHENBERICHT**

Nummer der Anmeldung

EP    91 10 7434
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 279 443 (FUJITSU)<br><br>* Zusammenfassung *<br>* Spalte 2, Zeile 2 - Zeile 9 *<br><br>----- | 1,3,4,7, 8 | |
| | | | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| DEN HAAG | 19 DEZEMBER 1991 | O'REILLY |